# EUROPEAN PATENT SPECIFICATION

(11) **EP 2 552 968 B1**
(45) Date of publication and mention of the grant of the patent: **01.03.2017**
(21) Application number: 10712015.6
(22) Date of filing: 30.03.2010
(51) Int. Cl.: C08B 11/12, C08L 1/28

(54) **NEW HIGH VISCOSITY CARBOXYMETHYL CELLULOSE AND METHOD OF PREPARATION**
NEUE HOCHVISKOSE CARBOXYMETHYLCELLULOSE UND HERSTELLUNGSVERFAHREN
NOUVELLE CARBOXYMÉTHYLCELLULOSE DE VISCOSITÉ ÉLEVÉE ET SON PROCÉDÉ DE PRÉPARATION

(43) Date of publication of application: 06.02.2013
(73) Proprietor: Dow Global Technologies LLC, Midland, MI 48674 (US)
(72) Inventor: ADDEN, Roland, 29664 Walsrode (DE); BRACKHAGEN, Meinolf, 29664 Walsrode (DE); MÜLLER, Volkhard, 29699 Bomlitz (DE); PETERMANN, Oliver, 25642 Rellingen (DE)
(74) Representative: f & e patent
(86) International application number: PCT/EP2010/001992
(87) International publication number: WO 2011/120533

(56) References cited:
- DE-A1- 3 246 676
- DE-B- 1 222 031
- US-A- 3 574 188
- US-A- 4 063 018
- NILS GRALEN, THE SVEDBERG: "Molecular weight of native cellulose", NATURE, 3865, 27 November 1943 (1943-11-27), pages 625-625, XP002612265,

## Description

The present invention is directed to new types of carboxymethyl cellulose (CMC), their methods of preparation and uses.

CMCs are used in a wide variety of technical fields. Areas which benefit from the thickening and gel-forming properties of CMC are, for example, oil industry (e.g. in drilling fluids), food industry, pharmaceutical industry, paper industry, electrical and electronic industry, textile industry and construction industry.

The preparation of CMCs by alkalization with NaOH or KOH and subsequent carboxymethylation with monochloroacetic acid is described in numerous documents, e.g. WO-A-99/20657, US-A-3,574,188, US-A-4,579,043, US-A-2004/0158058, and DD-A-233 376. In WO-A-99/20657, US-A-3,574,188, US-A-2004/0158058, and DD-A-233 376 relatively high amounts of hydroxide (such as about 2 mol or more per anhydroglucose unit of the cellulose) and monochloroacetic acid (such as about 1 mol or more) are used and thus CMCs with high degrees of substitution are obtained. US-A-4,579,043 is directed to highly absorbing CMCs prepared from cellulose fibers regenerated from a cuprammonium solution. In DD-A-233 376 the CMC is prepared in an ethanol/water mixture.

Although CMCs that dissolve in water to highly viscous solutions or gels are known (so called "high viscosity CMCs") these CMCs typically have high degrees of substitution which increases their production costs due to the high consumption of alkalizing agent and carboxymethylation agent. CMCs having a lower degree of substitution are also available on the market but solutions prepared from these CMCs suffer from lower viscosity often in combination with non-satisfactory clarity of the solution.

Thus, the object to be solved by the present invention is to provide a novel more economic process for preparing new types of CMC that form highly viscous solutions or gels.

The problem is solved by a process of preparing carboxymethyl cellulose comprising the steps of
a) suspending non-regenerated cellulose powder in a solvent/water mixture comprising water and isopropyl alcohol and adding an alkalizing agent either as a solid or as an aqueous solution and reacting non-regenerated cellulose with an alkalization agent in the presence of water and isopropyl alcohol and
b) then adding monohaloacetic acid or a salt thereof and reacting the alkalized cellulose with monohaloacetic acid or a salt thereof,
wherein 1.0 to 1.6 mol of the alkalization agent and 15 to 30 mol of water are used in step (a) and 0.5 to 0.8 mol of monohaloacetic acid or a salt thereof are used in step (b), each based on 1 mol of anhydroglucose unit of the cellulose.

The present invention is also directed to the novel CMCs obtainable by this process. The present invention further concerns CMCs having a degree of substitution of from 0.20 to 0.60 and a turbidity of up to 20 NTU, measured as a 1 weight % aqueous solution as well as CMCs having a degree of substitution of from 0.20 to 0.60 and a viscosity of at least 400 mPa·s, measured as a 1 weight % aqueous solution.

Other aspects of the present invention are the uses of the above CMCs in various technical fields where they can act as thickening agent and/or gelling agent, binder, stabilizer, emulsifier, film forming agent, suspending agent, protective colloid, or crystallization inhibitor.

The term "CMC" or "carboxymethyl cellulose" as used herein encompasses cellulose substituted with groups of the formula -CH₂CO₂A, wherein A is hydrogen or a monovalent cation, such as K⁺ or preferably Na⁺.

The process of the present invention comprises reacting non-regenerated cellulose with an alkalization agent and monohaloacetic acid or a salt thereof, preferably the sodium salt.

As used herein, the term "regenerated cellulose" refers to cellulose that has been prepared by regeneration (i.e., return to solid form) from a solution that includes dissolved cellulose fibers. The term "non-regenerated cellulose" refers to cellulose that has not gone through a process of dissolving cellulose, typically cellulose fibers, in a solvent, and then regenerating it from that solution, i.e. recovering cellulose in solid form. In particular "non-regenerated cellulose" refers to cellulose that has not been recovered from a cellulose xanthogenate solution or a cellulose/cupramonium solution or a solution of cellulose in N-methylmorpholin-N-oxide.

The alkalizing agent is preferably NaOH, KOH or a mixture thereof. In one embodiment of the invention NaOH is used as the alkalization agent. In another embodiment KOH is used as the alkalization agent. In the latter case remaining K⁺ ions in the produced CMC are preferably exchanged by Na⁺ ions in a subsequent step.

The monohaloacetic acid can be used as free acid or in its salt form. Preferably, monochloroacetic or its salt is used in the inventive process, including all preferred embodiments described in the following.

According to the present invention it is essential to observe the molar ratios of each of the above-described components during preparation of the CMC. The alkalizing agent, including the preferred alkalizing agents described above, is used in an amount of from 1.0 to 1.6 mol, preferably from 1.2 to 1.6 mol, more preferably from 1.3 to 1.5 mol and most preferably about 1.4 mol, each based on 1 mol of anhydroglucose unit of the cellulose. The monohaloacetic acid, preferably monochloroacetic acid, is used in an amount of from 0.5 to 0.8 mol, preferably from 0.6 to 0.8 mol and most preferably about 0.7 mol, each based on 1 mol of anhydroglucose unit of the cellulose. These preferred amounts of monohaloacetic acid are preferably used in combination with the preferred amounts of alkalizing agent indicated above. Water is used in the alkalizing step (a) in an amount of from 15 to 30 mol, preferably from 15 to 28 mol, more preferably from 19 to 25 mol, even more preferably from 20 to 24, and most preferably from 20 to 23, each based on 1 mol of anhydroglucose unit of the cellulose. These preferred amounts of water are preferably used in combination with the preferred amounts of alkalizing agent and monohaloacetic acid indicated above. Isopropyl alcohol is generally used in the alkalizing step (a) in an amount of from 5 to 80 mol, preferably from 10 to 60 mol, more preferably from 20 to 40 mol, and most preferably from 30 to 35 mol, each based on 1 mol of anhydroglucose unit of the cellulose. These preferred amounts of isopropyl alcohol are preferably used in combination with the preferred amounts of alkalizing agent, monohaloacetic acid and water indicated above.

In a preferred embodiment of the invention non-regenerated cellulose is reacted with the alkalization agent in the presence of water and isopropyl alcohol and an additional amount of methanol. Methanol, if present, is preferably used in the alkalizing step (a) in an amount of from 1 to 20 mol, more preferably from 2 to 15 mol, even more preferably from 3 to 10 mol, and most preferably from 4 to 7 mol, each based on 1 mol of anhydroglucose unit of the cellulose. These preferred amounts of methanol are preferably used in combination with the preferred amounts of alkalizing agent, monohaloacetic acid, water, and isopropyl alcohol indicated above.

It is understood that the solvents (i.e. water, isopropyl alcohol and optionally methanol) introduced in the alkalizing step (a) are typically not removed deliberately before or during reaction of the alkalized cellulose with the monohaloacetic acid and thus said solvents also constitute the reaction medium of step (b). However, it is noted that the amounts of water, isopropyl alcohol and optional methanol specified above only refer to the amounts present during alkalization in step (b) and do not include any additional amounts of said solvents that may optionally be added later in the process. e.g. during reaction with monohaloacetic acid in step (b).

In some embodiments, including embodiments using the preferred amounts of components as indicated above, the alkalizing agent and the monohaloacetic acid are used in a molar ratio of from 2.5:1 to 1.5:1, more preferably from 2.3:1 to 1.7:1, even more preferably from 2.1:1 to 1.9:1, and most preferably of about 2:1.

The inventive process of preparing CMCs as described above leads to new types of CMCs.

Typically, the novel CMCs according to the present invention have a degree of substitution of from 0.20 to 0.60, preferably from 0.30 to 0.60, more preferably from 0.38 to 0.57, even more preferably from 0.40 to 0.51 and most preferably from 0.42 to 0.48. The degree of substitution is the average number of OH groups that have been substituted in one anhydroglucose unit. It is determined according to ASTM D 1439-03 "Standard Test Methods for Sodium Carboxymethylcellulose; Degree of Etherification, Test Method B: Nonaqueous Titration". The treatment of a solid sample of the CMC with glacial acetic acid at boiling temperature releases an acetate ion quantity equivalent to the sodium carboxymethyl groups. These acetate ions can be titrated as a strong base in anhydrous acetic acid using a perchloric acid standard solution. The titration end point is determined potentiometrically. Other alkaline salts of carboxylic acids (e. g. sodium glycolate and di-sodium diglycolate) behave similarly and are co-titrated.

It is quite surprising that the new types of CMC according to the present invention form highly viscous solutions or gels in aqueous media despite their low to moderate degree of substitution.

In one aspect of the present invention the novel CMCs, including those having preferred degrees of substitution as described above, typically have a viscosity, measured as a 1 weight % aqueous solution as described below, of at least 400 mPa·s, preferably at least 440 mPa·s, more preferably at least 600 mPa·s, and most preferably of at least 800 mPa·s. The viscosity is generally up to 30,000 mPa·s, preferably up to 25,000 mPa·s, more preferably up to 20,000 mPa·s, measured as a 1 weight % aqueous solution as described below.

In order to determine the viscosity a 1 % solution is prepared as follows (total amount of solution 200 g). 198.0 g deionized water (water in CMC is subtracted) is placed in 250 ml screw cap bottle. 2 g (dry weight) of the CMC are added onto the surface. After closing the bottle it is vigorously shaken and placed on a rolling device until a clear solution is obtained (48 h). Afterwards the solution is allowed to settle without stirring/rolling over night. The viscosity is analyzed using a Haake VT550 Viscotester at 20°C (+/- 0.1°C) and at a shear rate of 2.55 s⁻¹. The MV DIN sensor and the MV cup is used. The solution of the CMC is filled in the cup until the ring is reached. The solution is pretempered at a 20°C water bath. After the system is closed the solution is tempered for 3 min without shearing, then the analysis starts. After shearing for 110 s at 2.55 s⁻¹ 15 data points are taken and averaged in 20 s.

Not only that aqueous solutions of the present CMCs are highly viscous, it is further unexpected that the clarity of the aqueous CMC solutions is good, i. e. much better than it would have been predicted based on the relatively low degree of substitution.

In another aspect of the present invention the novel CMCs, including those preferred CMCs described above, typically show a turbidity as 1 weight % aqueous solutions of up to 20 NTU (nephelometric turbidity units), preferably up to 15 NTU, more preferably from 0 to 10 NTU, even more preferably from 0.5 to 7 NTU, and most preferably from 0.5 to 5 NTU, measured as indicated below.

Preferably, 1 weight % aqueous solutions of the novel CMCs according to the present invent, including those preferred CMCs described above, have transmission values of from 80 to 100 %, more preferably from 84 to 100 %, even more preferably from 87 to 99 %, still more preferably from 90 to 99 %, and most preferably from 94 to 99 %, measured as indicated below.

1 weight % aqueous solutions of CMC are prepared as described above in connection with the viscosity analysis. The transmission and the turbidity are analyzed with the Turbidimeter 2100AN using a tungsten filament lamp emitting light of a wavelength of 300 to 1000 nm (Hach Company, Loveland, Colorado, USA). The transmission is the photometric analysis of the transmitted light through a sample cell (diameter: 24 mm) at a given wave length (here 610 nm). It is given in % transmitted light. The system is calibrated against water (100 % transmission). The result is the average of eight measurements. The turbidity is the analysis of the scattered light through a sample cell (diameter: 24mm) and is given in NTUs (nephelometric turbidity units) according to USEPA method 180.1. The analysis is performed against a formazin standard ranging from < 0.1 NTU to 7500 NTU (StablCal™, catalogue number 2659505). A USEPA method 180.1 filter module (catalogue number 3031200, 400 to 600 nm) is used. The result is the average of ten measurements.

Within the meaning of the present application the terms "high viscosity CMC" or "CMC having high or low viscosity" or similar expressions refer to the viscosities of aqueous solutions of the CMC.

The type of non-regenerated cellulose to be used for preparing the CMC is not essential for the present invention and is governed by the intended end-use of the CMC. Conventional non-regenerated starting materials are natural cellulose, such as cotton linters and wood pulp, e.g. hard wood or soft wood pulp, Typically, cotton linters or wood pulp are used, depending on the desired application of the CMC. Hitherto, cotton linters have often been employed to produce high viscosity CMC. But in addition to high costs cotton linters suffer from that they are not allowed to be used in food in a large number of countries because no grades are available that are guaranteed to be free of genetically modified organism (GMO free). Using the process of the present invention it can be switched for a lot of applications to the more economical wood pulp having a lower molecular weight instead of cotton linters while still a high viscosity CMC is obtained. Thanks to the present invention it is now also possible to prepare food grade CMCs derived from wood pulp which can be used as powerful thickening agents in the food industry due to their superior viscosity and gel forming properties. Although wood pulp is the preferred raw material in the present process for economical reasons it is, of course, also possible to employ cotton linters if a CMC of extraordinarily high viscosity is desired for some reasons.

The CMCs according to the present invention can be prepared according to any known technique and as long as the conditions specified in the claims are met the actual realization of the process is not crucial. Methods of preparing CMC are well-known to the person skilled in the art and can be found in e. g. US Patent Nos. 2,067,946; 2,636,879; 4,063,018; 4,250,305; and 4,339,573 and in Stigsson, Chem. Eng. and Material Proceedings, Dec. 2001, 1 - 12. Any standard technique for preparation is applicable.

The essential steps of the preparation method are alkalizing the cellulose by reaction with the alkalizing agent (alkalizing step (a)) and adding monohaloacetic acid to cause etherification of the alkali cellulose (carboxymethylation step (b)).

The cellulose is first alkalized in the presence of water and isopropyl alcohol and optionally methanol in the alkalizing step (a) and then the monohaloacetic acid is added in the carboxymethylation step. In the alkalizing step the single components (e.g. cellulose, water, isopropyl alcohol, alkalizing agent, and optionally methanol) can be added in arbitrary order. However, it is preferred that the cellulose is combined with water, isopropyl alcohol, and optionally methanol in a first step and the alkalizing agent is then added in a subsequent step. If methanol is used, it can be added to the reaction mixture before, at the same time or shortly after the addition of the monohaloacetic acid, but preferably it is added at the same time as water and/or isopropyl alcohol, either separately or as a mixture with water and/or isopropyl alcohol.

There are various options how to contact the cellulose with the alkalizing agent. Preferably, cellulose powder is used as starting material. Typically, the cellulose powder is suspended (slurried) in the solvent/water mixture comprising water, isopropyl alcohol and optionally methanol before the alkalizing agent is added as a solid or as an aqueous solution, however the total amount of water used in the alkalizing step should be 15 to 30 mol, based on 1 mol of anhydroglucose unit. The amount of cellulose in the starting slurry of cellulose in the solvent/water mixture is preferably within the range of from 1 to 12 weight %, more preferably from 1 to 10 weight %, and most preferably from 3 to 8 weight %, each based on the total weight of cellulose and solvent/water mixture.

According to the preferred slurry method the alkalizing step (a) is typically conducted at a temperature within the range of from 10 to 40°C, preferably from 15 to 40°C, more preferably from 15 to 30°C, even more preferably from 18 to 25°C, and most preferably at about 20°C. Typical reaction times for the alkalization step range from 15 to 120 min, preferably from 40 to 100 min, and more preferably from 50 to 80 min depending on the reaction temperature. In one embodiment the alkalizing step is conducted at about 20°C for 50 to 70 min, preferably for 60 min.

In the carboxymethylation step (b) the monohaloacetic acid or a salt thereof, preferably the sodium salt, can be added neat or as a solution, preferably as an aqueous solution or as a solution in water and isopropyl alcohol and optionally methanol. The carboxymethylation step is typically conducted at a temperature within the range of from 40 to 100°C, preferably from 50 to 90°C, more preferably from 60 to 80°C, and most preferably at about 70°C. In preferred embodiments the monohaloacetic acid is already added to the reaction mixture before the carboxymethylation temperature is reached; more preferably the monohaloacetic acid is already added before the heating-up phase begins or within the first minutes of the heating-up phase, generally at a temperature which is described above for the alkalizing step, e.g. at from 15 to 40°C. The early addition of the monohaloacetic acid at lower temperatures may avoid an undesired degradation of the cellulose (resulting in a decrease of viscosity) which may occur at the higher temperatures in absence of monohaloacetic acid. After the desired temperature of the carboxymethylation step (carboxymethylation temperature) as mentioned before is reached, the carboxymethylation temperature is typically held for a period of from 0 to 180 min, preferably from 20 to 140 min.

The product obtained from the carboxymethylation step, i. e. the etherification, is the sodium or potassium salt of carboxymethyl cellulose depending on which alkalizing agent was employed. According to a preferred embodiment the CMC salt is neutralized by adding acid, preferably an organic acid such as acetic acid or formic acid, more preferably acetic acid. Herein "neutralizing" means adjusting the pH value to a value of from 6 to 9, preferably 7 to 8. The CMC is then separated from the reaction mixture and purified, if necessary, depending on the intended end-use, and dried. Purification is performed according to standard methods well-known to the person skilled in the art. For example, the CMC can be washed with organic solvents including mixtures of organic solvents and solvent(s)/water mixtures, such as methanol, acetone, methanol/water mixtures, acetone/methanol mixtures, and methanol/isopropyl alcohol/water mixtures.

The outstanding property of the CMCs according to the present invention is their ability to form nearly clear highly viscous aqueous solutions or gels in combination with a low to moderate degree of substitution of the cellulose.

It has been found that the use of KOH as alkalizing agent in the present process results in CMCs with even superior gel-forming properties (higher viscosity and clarity) as compared to the use of NaOH. The improved gel-forming character of the CMC is maintained even if the K⁺ ions in the produced CMC have been exchanged by Na⁺ ions in a subsequent step. K⁺ ions in the produced CMC can be exchanged by Na⁺ ions after separating the CMC from the reaction mixture by, for example, washing it extensively with methanol comprising about 20 weight percent of a saturated aqueous sodium chloride solution. After the exchange of the K⁺ ions by Na⁺ ions the CMC can be purified according to known procedures, for example as described above or in the examples below.

The CMCs according to the present invention are promising candidates for a lot of different applications. For example, they can be used as thickening agents and/or gelling agents, binders, stabilizers, emulsifiers, film forming agents, suspending agents, protective colloids, or crystallization inhibitors. Their beneficial properties make the present CMCs useful in a variety of technical fields, including their use in drilling fluids, such as oil drilling fluids; in pharmaceutical dosage forms, such as capsules, tablets, solutions, suspensions, emulsions, creams, and lotions; in food products, such as processed meat products, dairy products, bakery products, structured, extruded or coated food products, like meat substitutes, dressings, sauces, marinades, soups and spreads; in cosmetic applications, such as hair styling products, toothpastes, emulsions, creams, and lotions ; in detergents; in paper coating or paper binding; in welding electrodes; in textile applications, such as textile printing and dyeing; in ceramic applications, such as clay bodies and tile production; in adhesives; in paints; and in construction applications, such as gypsum or cement based dry mortar applications.

The following examples are provided for illustrative purposes only and are not intended to limit the scope of the claims that follow. Unless otherwise indicated, all parts and percentages are by weight.

### EXAMPLES

Cellulose starting material:
- Ex. 1-20:: a wood pulp cellulose having an intrinsic viscosity of 750-850 ml/g, determined according to Cuen (ISO 5351)
- Ex. 21-24:: a wood pulp cellulose having an intrinsic viscosity of 320-420 ml/g, determined according to Cuen (ISO 5351)

In all of the examples 129.7 g of dry cellulose (corresponds to 0.8 mol anhydroglucose units (AGU)) were used together with varying amounts of isopropyl alcohol (IPA), methanol (MeOH) (or ethanol (EtOH) in Ex. 21 to 24), water, NaOH or KOH, and monochloroacetic acid (MCA) as indicated in the Table. First, the cellulose powder was introduced into a dry 3 liter laboratory reactor and then, the solvent mixture of isopropyl alcohol, methanol (or ethanol) and water was added under a nitrogen atmosphere. NaOH (as prills) or KOH (as prills) were added under stirring at a temperature of 20°C and stirring was continued at 20°C for a total of 60 min. Afterwards, the reaction mixture was heated up to 70°C within 40 min and the monochloroacetic acid was added as a 80 weight % aqueous solution during the first minutes of the heating-up phase. The temperature of 70°C was held for 120 min during the carboxymethylation step and then the reaction mixture was cooled down to 20°C within about 60 min. The pH value of the cooled reaction mixture was adjusted to 7.5 with acetic acid and the solution was subsequently filtered. The filter residue was subsequently washed at least 5 times with 2 l of a methanol/water mixture (methanol/water weight ratio of 4:1) until no chloride ions were detected in the filtrate. This was followed by one final washing step with pure methanol. The washed samples were dried overnight in the drying cabinet at 55°C and then milled in a laboratory mill.

The degree of substitution of the CMCs obtained was determined as described in the general part of the specification. 1 weight % solutions of the CMC samples were also prepared and their viscosity, turbidity and transmission were determined as described in the general part of the specification. The results are given in the Table.

**Table**

| Ex. # | IPA¹ [mol/mol AGU] | EtOH¹ [mol/mol AGU] | MeOH¹ [mol/mol AGU] | H₂O¹ [mol/mol AGU] | NaOH [mol/mol AGU] | KOH [mol/mol AGU] | CES [mol/mol AGU] | DS² | Viscosity [mPa·s] | Turbidity [NTU] | Transmission [%] | Yield³ [%] |
|---|---|---|---|---|---|---|---|---|---|---|---|---|
| 1* | 35 | | 4.5 | 12 | 1.2 | | 0.6 | 0.43 | 58 | | | 71.7 |
| 2* | 35 | | 4.5 | 12 | 1.4 | | 0.7 | 0.5 | 72 | 277 | 19 | 71.4 |
| 3* | 35 | | 4.5 | 12 | 1.6 | | 0.8 | 0.6 | 101 | 153 | 24 | 75.0 |
| 4* | 35 | | 4.5 | 12 | 2.2 | | 1.1 | 0.82 | 170 | 4 | 92 | 74.5 |
| 5 | 32 | | 4.5 | 20 | 1.2 | | 0.6 | 0.4 | 1076 | 14 | 89 | 66.7 |
| 6 | 32 | | 4.5 | 20 | 1.4 | | 0.7 | 0.48 | 608 | 4 | 97 | 68.6 |
| 7 | 32 | | 4.5 | 20 | 1.6 | | 0.8 | 0.57 | 442 | 2 | 99 | 71.3 |
| 8* | 32 | | 4.5 | 20 | 2.2 | | 1.1 | 0.77 | 230 | 1 | 99 | 70.0 |
| 9 | 31 | | 4.5 | 23 | 1.2 | | 0.6 | 0.39 | 1888 | 15 | 85 | 65.0 |
| 10 | 31 | | 4.5 | 23 | 1.4 | | 0.7 | 0.45 | 1876 | 6 | 95 | 64.3 |
| 11 | 31 | | 4.5 | 23 | 1.6 | | 0.8 | 0.53 | 800 | 2 | 98 | 66.3 |
| 12* | 31 | | 4.5 | 23 | 2.2 | | 1.1 | 0.72 | 236 | 1 | 98 | 65.5 |
| 13* | 35 | | 4.5 | 12 | | 1.4 | 0.7 | 0.53 | 349 | 57 | 55 | 75.7 |
| 14* | 35 | | 4.5 | 12 | | 1.6 | 0.8 | 0.59 | 334 | 12 | 55 | 73.8 |
| 15 | 32 | | 4.5 | 20 | | 1.2 | 0.6 | 0.39 | 3092 | 8 | 91 | 65.0 |
| 16 | 32 | | 4.5 | 20 | | 1.4 | 0.7 | 0.45 | 2860 | 4 | 98 | 64.3 |
| 17 | 32 | | 4.5 | 20 | | 1.6 | 0.8 | 0.51 | 2756 | 4 | 97 | 63.8 |
| 18 | 31 | | 4.5 | 23 | | 1.2 | 0.6 | 0.36 | 3180 | 10 | 88 | 60.0 |
| 19 | 31 | | 4.5 | 23 | | 1.4 | 0.7 | 0.42 | 3880 | 7 | 92 | 60.0 |
| 20 | 31 | | 4.5 | 23 | | 1.6 | 0.8 | 0.47 | 2984 | 5 | 96 | 58.8 |
| 21* | | 45 | | 20 | 1.4 | | 0.7 | 0.10 | 2 | 4188 | 2.7 | 14.3 |
| 22* | | 45 | | 20 | 1.6 | | 0.8 | 0.16 | 5 | 2647 | 3.9 | 20.0 |
| 23* | | 45 | | 20 | 0.7 | 0.7 | 0.7 | 0.12 | 2 | 3768 | 2.9 | 17.1 |
| 24* | | 45 | | 20 | 0.8 | 0.8 | 0.8 | 0.17 | 4 | 1955 | 4.7 | 21.3 |

| | | | | | | | | | | | | |
|---|---|---|---|---|---|---|---|---|---|---|---|---|
| * comparison example ¹ amounts used in the alkalizing step ² degree of substitution ³ based on monochloroacetic acid | | | | | | | | | | | | |

In Comparative Examples 4, 8, and 12 the alkalizing agent NaOH and the monochloroacetic acid were used in high amounts outside the claimed ranges and consequently CMCs having high degrees of substitution (≥ 0.72) were obtained. Despite of their relatively high degree of substitution the viscosity of their solutions is relatively low (≤ 236 mPa·s), i.e. lower than the viscosity of the inventive examples. Comparative Examples 1, 2, 3, 13, and 14 were prepared with low amounts of water outside the claimed range and the solutions of the resulting CMCs all exhibit low transmission (≤ 55 %) in combination with relatively high turbidity (≥ 12 NTU) and relatively low viscosity (≤ 349 mPa·s). It is evident that only the examples according to the present invention provide CMCs which are, despite of their low degree of substitution, superior as regards the viscosity, turbidity and transmission of their aqueous solutions.

German Offenlegungsschrift DD-A-233 376 discloses alkalization of cellulose with a mixture of KOH and NaOH in the presence of 1.5 to 15 weight parts of ethanol with a water content of 20 to 60 weight percent. However, alkalization with such a low amount of diluent requires the use of expensive high intensity mixers, such as plug shear mixers. Stirred reactors which are commonly used in slurry processes are not suitable for such reaction medium. When alkalizing cellulose with a mixture of KOH and NaOH in the presence of an amount of ethanol/water mixture that is sufficient to allow the use of a stirred reactor, CMC with only a low degree of substitution was obtained which has a very low viscosity and a high turbidity, as illustrated by Comparative Examples 23 and 24. Comparative Examples 21 and 22 illustrate that no better results were achieved when using NaOH instead of a mixture of KOH and NaOH.

## Claims

1. A process of preparing carboxymethyl cellulose comprising the steps of
a) suspending non-regenerated cellulose powder in a solvent/water mixture comprising water and isopropyl alcohol and adding an alkalizing agent either as a solid or as an aqueous solution and reacting the non-regenerated cellulose with the alkalization agent in the presence of water and isopropyl alcohol and
b) then adding monohaloacetic acid or a salt thereof and reacting the alkalized cellulose with monohaloacetic acid or a salt thereof,
wherein 1.0 to 1.6 mol of the alkalization agent and 15 to 30 mol of water are used in step (a) and 0.5 to 0.8 mol of monohaloacetic acid or a salt thereof are used in step (b), each based on 1 mol of anhydroglucose unit of the cellulose.

2. The process of claim 1 wherein step (a) is conducted in the presence of water, isopropyl alcohol and methanol.

3. The process of claims 1 or 2 wherein from 5 to 80 mol of isopropyl alcohol are used in step (a), based on 1 mol of anhydroglucose unit of the cellulose.

4. The process of any one of claims 1 to 3, wherein from 15 to 28 mol of water are used in step (a), based on 1 mol of anhydroglucose unit of the cellulose.

5. The process of any one of claims 1 to 4, wherein from 1.2 to 1.6 mol of alkalization agent are used in step (a), based on 1 mol of anhydroglucose unit of the cellulose.

6. The process of any one of claims 1 to 5, wherein the product obtained after alkalization and reaction with monohaloacetic acid or a salt thereof is neutralized by adding an acid, preferably acetic acid.

7. The process of any one of claims 1 to 6 wherein NaOH is used as alkalization agent.

8. The process of any one of claims 1 to 6 wherein KOH is used as alkalization agent.

9. The process of claim 8 wherein the K⁺ ions are exchanged by Na⁺ ions in a subsequent step.

10. Carboxymethyl cellulose obtainable by the process of any of the preceding claims.

11. Carboxymethyl cellulose having a degree of substitution of from 0.20 to 0.51 and a turbidity of up to 10 NTU, measured as a 1 weight % aqueous solution according to USEPA method 180.1.

12. The carboxymethyl cellulose of claim 11 having a viscosity of at least 400 mPa·s, measured as a 1 weight % aqueous solution at a temperature of 20 °C.

13. Use of carboxymethyl cellulose of any one of claims 11 to 12 as a thickening agent and/or gelling agent, binder, stabilizer, emulsifier, film forming agent, suspending agent, protective colloid, or crystallization inhibitor.

14. Use of carboxymethyl cellulose of any one of claims 11 to 12 in drilling fluids, such as oil drilling fluids; in pharmaceutical dosage forms, such as capsules, tablets, solutions, suspensions, emulsions, creams, and lotions; in food products, such as processed meat products, dairy products, bakery products, structured, extruded or coated food products, like meat substitutes, dressings, sauces, marinades, soups and spreads; in cosmetic applications, such as hair styling products, toothpastes, emulsions, creams, and lotions; in detergents; in paper coating or paper binding; in welding electrodes; in textile applications, such as textile printing and dyeing; in ceramic applications, such as clay bodies and tile production; in adhesives; in paints; and in construction applications, such as gypsum or cement based dry mortar applications.

## Patentansprüche

1. Verfahren zur Herstellung von Carboxymethylcellulose, umfassend die Schritte:
a) Suspendieren von Pulver aus nicht regenerierter Cellulose in einer Lösungsmittel/Wasser-Mischung, die Wasser und Isopropylalkohol enthält, und Hinzugeben eines Alkalisierungsmittels entweder als Feststoff oder als eine wässrige Lösung und Umsetzen der nicht regenerierten Cellulose mit dem Alkalisierungsmittel in Gegenwart von Wasser und Isopropylalkohol und
b) dann Hinzufügen von Monohalogenessigsäure oder einem Salz davon und Umsetzen der alkalisierten Cellulose mit Monohalogenessigsäure oder einem Salz davon,
wobei 1,0 bis 1,6 mol des Alkalisierungsmittels und 15 bis 30 mol Wasser in Schritt (a) und 0,5 bis 0,8 mol Monohalogenessigsäure oder ein Salz davon in Schritt (b) verwendet werden, jeweils bezogen auf 1 mol Anhydroglucoseeinheit der Cellulose.

2. Verfahren nach Anspruch 1, wobei Schritt (a) in Gegenwart von Wasser, Isopropylalkohol und Methanol durchgeführt wird.

3. Verfahren nach Anspruch 1 oder 2, worin 5 bis 80 mol Isopropylalkohol in Schritt (a) verwendet werden, bezogen auf 1 mol Anhydroglucoseeinheit der Cellulose.

4. Verfahren nach einem der Ansprüche 1 bis 3, worin 15 bis 28 mol Wasser in Schritt (a) verwendet werden, bezogen auf 1 mol Anhydroglucoseeinheit der Cellulose.

5. Verfahren nach einem der Ansprüche 1 bis 4, worin 1,2 bis 1,6 mol Alkalisierungsmittel in Schritt (a) verwendet werden, bezogen auf 1 mol Anhydroglucoseeinheit der Cellulose.

6. Verfahren nach einem der Ansprüche 1 bis 5, wobei das Produkt, das nach Alkalisierung und nach Reaktion mit Monohalogenessigsäure oder einem Salz davon erhalten wird, neutralisiert wird, indem eine Säure, vorzugsweise Essigsäure, zugegeben wird.

7. Verfahren nach einem der Ansprüche 1 bis 6, worin NaOH als Alkalisierungsmittel verwendet wird.

8. Verfahren nach einem der Ansprüche 1 bis 6, worin KOH als Alkalisierungsmittel verwendet wird.

9. Verfahren nach Anspruch 8, worin die K⁺ Ionen durch Na⁺ Ionen in einem nachfolgenden Schritt ausgetauscht werden.

10. Carboxymethylcellulose erhältlich nach dem Verfahren gemäß einem der vorstehenden Ansprüche.

11. Carboxymethylcellulose mit einem Substitutionsgrad von 0,20 bis 0,51 und einer Trübheit von bis zu 10 NTU, gemessen als eine 1 gew.-%ige wässrige Lösung gemäß USEPA Verfahren 180.1.

12. Carboxymethylcellulose nach Anspruch 11 mit einer Viskosität von mindestens 400 mPa·s, gemessen als eine 1 gew.-%ige wässrige Lösung bei einer Temperatur von 20 °C.

13. Verwendung von Carboxymethylcellulose nach einem der Ansprüche 1 bis 12 als ein Verdickungsmittel und/oder Geliermittel, Bindemittel, Stabilisator, Emulgator, Filmbildner, Suspendierhilfsmittel, Schutzkolloid oder Kristallisationsinhibitor.

14. Verwendung von Carboxymethylcellulose nach einem der Ansprüche 1 bis 12 in Bohrspülungen, wie etwa Ölbohrspülungen; in pharmazeutischen Dosierformen, wie etwa Kapseln, Tabletten, Lösungen, Suspensionen, Emulsionen, Cremes und Lotionen; in Lebensmittelprodukten, wie etwa verarbeiteten Fleischprodukten, Milchprodukten, Bäckereiwaren, strukturierten, extrudierten oder beschichteten Lebensmittelprodukten, wie Fleischersatzstoffen, Dressings, Soßen, Marinaden, Suppen und Brotaufstrichen; in kosmetischen Anwendungen, wie etwa Haarstylingprodukten, Zahnpasten, Emulsionen, Cremes und Lotionen; in Waschmitteln; bei der Papierbeschichtung oder Papierbindung; in Schweißelektroden; in textilen Anwendungen, wie etwa Textildruck und -färbung; in keramischen Anwendungen, wie etwa Tonmassen und Fliesenherstellung; in Klebstoffen; in Farben und in Bauanwendungen, wie etwa trockenen Mörtelanwendungen auf Gips- oder Zementbasis.

## Revendications

1. Un procédé de préparation de carboxyméthylcellulose comprenant les étapes consistant
a) à mettre en suspension de la poudre de cellulose non régénérée dans un mélange solvant/eau comprenant de l'eau et de l'alcool isopropylique et à ajouter un agent alcalinisant soit sous forme de solide, soit sous forme de solution aqueuse et à faire réagir la cellulose non régénérée avec l'agent d'alcalinisation en présence d'eau et d'alcool isopropylique et
b) à ajouter ensuite de l'acide monohalogénoacétique ou un sel de celui-ci et à faire réagir la cellulose alcalinisée avec l'acide monohalogénoacétique ou un sel de celui-ci,
dans lequel il est utilisé à l'étape (a) de 1,0 à 1,6 mol de l'agent d'alcalinisation et de 15 à 30 mol d'eau et il est utilisé à l'étape (b) de 0,5 à 0,8 mol d'acide monohalogénoacétique ou d'un sel de celui-ci, chacun rapporté à 1 mol d'unité anhydroglucose de la cellulose.

2. Le procédé de la revendication 1 dans lequel l'étape (a) est réalisée en présence d'eau, d'alcool isopropylique et de méthanol.

3. Le procédé des revendications 1 ou 2 dans lequel il est utilisé à l'étape (a) de 5 à 80 mol d'alcool isopropylique, rapporté à 1 mol d'unité anhydroglucose de la cellulose.

4. Le procédé de l'une quelconque des revendications 1 à 3, dans lequel il est utilisé à l'étape (a) de 15 à 28 mol d'eau, rapporté à 1 mol d'unité anhydroglucose de la cellulose.

5. Le procédé de l'une quelconque des revendications 1 à 4, dans lequel il est utilisé à l'étape (a) de 1,2 à 1,6 mol d'agent d'alcalinisation, rapporté à 1 mol d'unité anhydroglucose de la cellulose.

6. Le procédé de l'une quelconque des revendications 1 à 5, dans lequel le produit obtenu après alcalinisation et réaction avec de l'acide monohalogénoacétique ou un sel de celui-ci est neutralisé en ajoutant un acide, préférablement de l'acide acétique.

7. Le procédé de l'une quelconque des revendications 1 à 6 dans lequel il est utilisé du NaOH comme agent d'alcalinisation.

8. Le procédé de l'une quelconque des revendications 1 à 6 dans lequel il est utilisé du KOH comme agent d'alcalinisation.

9. Le procédé de la revendication 8 dans lequel les ions K⁺ sont échangés par des ions Na⁺ dans une étape ultérieure.

10. Carboxyméthylcellulose pouvant être obtenue grâce au procédé de n'importe lesquelles des revendications précédentes.

11. Carboxyméthylcellulose ayant un degré de substitution allant de 0,20 à 0,51 et une turbidité allant jusqu'à 10 UTN, mesurée en tant que solution aqueuse à 1 % en poids selon la méthode USEPA 180.1.

12. La carboxyméthylcellulose de la revendication 11 ayant une viscosité d'au moins 400 mPa•s, mesurée en tant que solution aqueuse à 1 % en poids à une température de 20 °C.

13. Utilisation de la carboxyméthylcellulose de l'une quelconque des revendications 11 à 12 en tant qu'agent épaississant et/ou agent gélifiant, liant, stabilisant, émulsifiant, agent filmogène, agent de mise en suspension, colloïde protecteur, ou inhibiteur de cristallisation.

14. Utilisation de la carboxyméthylcellulose de l'une quelconque des revendications 11 à 12 dans des fluides de forage, tels que des fluides de forage pétrolier ; dans des formes galéniques pharmaceutiques, telles que des capsules, comprimés, solutions, suspensions, émulsions, crèmes et lotions ; dans des produits alimentaires, tels que des produits de viande transformée, produits laitiers, produits de boulangerie, produits alimentaires structurés, extrudés ou enrobés, comme des succédanés de viande, vinaigrettes, sauces, marinades, soupes et pâtes à tartiner ; dans des applications cosmétiques, telles que des produits de coiffage, dentifrices, émulsions, crèmes et lotions ; dans des détergents ; dans le couchage papier ou la reliure papier ; dans des électrodes de soudage ; dans des applications textiles, telles que la teinture et l'impression sur textile ; dans des applications céramiques, telles que la production de carreaux et pâtes d'argile ; dans des adhésifs ; dans des peintures ; et dans des applications de construction, telles que des applications de mortier sec à base de plâtre ou de ciment.
